# FASCICULE DE BREVET EUROPEEN

(11) **EP 2 436 155 B1**
(45) Date de publication et mention de la délivrance du brevet: **20.02.2019**
(21) Numéro de dépôt: 10728812.8
(22) Date de dépôt: 25.05.2010
(51) Int. Cl.: H04L 12/701, H04L 12/725, H04L 12/721

(54) **PROCÉDÉ DE GESTION DE CHEMINS ENTRE UN NOEUD SOURCE ET UN NOEUD DESTINATAIRE AU NIVEAU DE LA COUCHE DE LIAISON, NOEUD SOURCE ET TABLE CORRESPONDANTS**
VERFAHREN ZUR PFADVERWALTUNG ZWISCHEN EINEM QUELLENKNOTEN UND EINEM ZIELKNOTEN AUF SICHERUNGSSCHICHT EBENE, ENTSPRECHENDEN QUELLENKNOTEN UND TABELLE
METHOD FOR PATH MANAGEMENT BETWEEN A SOURCE NODE AND A DESTINATION NODE AT THE LINK LAYER LEVEL, CORRESPONDING SOURCE NODE AND TABLE

(30) Priorité: 25.05.2009 FR 0953417
(43) Date de publication de la demande: 04.04.2012
(73) Titulaire: Orange, 75015 Paris (FR)
(72) Inventeur: CHRISTIN, Philippe, F-35000 Rennes (FR); SAHALY, Sinda, F-35510 Cesson Sevigne (FR)
(74) Mandataire: Vidon Brevets & Stratégie
(86) Numéro de dépôt international: PCT/FR2010/051002
(87) Numéro de publication internationale: WO 2010/136715

(56) Documents cités:
- US-A1- 2003 147 400
- US-A1- 2006 291 392
- US-A1- 2007 230 369
- US-A1- 2008 159 144
- US-A1- 2008 232 276
- US-B1- 6 754 662

## Description

Le domaine de l'invention est celui de la transmission de flux de données entre un noeud source et un noeud destinataire (transmission « unicast »), dans un réseau local permettant de définir au moins deux chemins, ou trajets, de communication entre le noeud source et le noeud destinataire.

Plus précisément, l'invention concerne l'optimisation de la couche de liaison de données, qui est la deuxième couche des sept couches du modèle OSI (pour "Open Systems Interconnection").

L'invention trouve notamment des applications dans les réseaux domestiques, et en particulier (mais non exclusivement) les réseaux multi-technologiques, mettant en oeuvre, par exemple, des technologies Ethernet, Wifi ou PLC (communication par courant porteur), ou encore dans les réseaux professionnels de petite dimension.

L'état de la technique comprend les documents suivants.

US2008/0232276 divulgue un procédé permettant de reconfigurer un arbre couvrant (« spanning tree ») en fonction de la charge (en volume) des flots d'information, obtenus via l'analyse de statistiques collectées. En fonction d'une priorité affectée à un flot de données et de statistiques collectées au cours de la vie du réseau, l'arbre de couverture peut-être modifié afin que la trajectoire pour ce flot de données soit la plus courte possible. Ainsi, on évite potentiellement la perte de paquets à cause de trajectoires trop grandes.

US6 754 662 divulgue une architecture de classification de paquets comprend une table de hachage en antémémoire qui stocke un sous-ensemble d'identificateurs de classification (c.-à-d. classIDs) pour une pluralité de flux de données. Un moteur de transfert couplé au cache reçoit les paquets et tente d'abord de classer le paquet en générant une clé de hachage basée sur les informations d'en-tête du paquet et en utilisant la clé de hachage pour rechercher une entrée correspondante dans la table de hachage. Ceci vise à maintenir des vitesses de classification élevées en (1) utilisant une fonction de hachage qui distribue uniformément les indices clés de hachage, réduisant ainsi la probabilité de collisions et en (2) utilisant un système de suppression de hachage qui utilise les statistiques et les caractéristiques du trafic Internet pour améliorer la probabilité que les entrées de hachage correspondant à des flux statistiquement importants resteront en cache.

US2007 0230369 divulgue une technique permettant d'améliorer le protocol STP en utilisant des liens « bloqués » afin de faire transiter des paquets de données unicast. Cependant, tous les flux de données point-à-point (unicast) transitent sur le même chemin.

US2003 0147400 divulgue une méthode d'acheminement du trafic dans un réseau comprend la détermination des informations topologiques pour le réseau et la détermination des demandes de trafic pour de multiples classes de services. La méthode comprend la détermination d'une fonction objective pour un problème d'optimisation en utilisant les informations et les demandes topologiques, et la détermination d'une solution qui spécifie un chemin de réseau pour chaque demande.

Pour mémoire, on rappelle que la couche de liaison de données s'intercale entre la couche physique et la couche réseau. Elle assure la transmission de trames entre les noeuds d'un même réseau, en contrôlant notamment l'adressage et l'arbitrage sur le support de transmission mis en oeuvre. Elle s'appuie en particulier sur la sous-couche de contrôle d'accès au support («Media Access Control» en anglais, ou MAC). Chaque noeud du réseau est identifié par son adresse MAC.

Généralement, au niveau de la couche de liaison, un chemin unique est identifié pour assurer la liaison entre un noeud source et un noeud destinataire. Ce chemin est défini par la séquence de noeuds intermédiaires par lesquels l'information doit transiter, pour atteindre le noeud destinataire. Ainsi, tous les flux à transmettre depuis un noeud source donné vers un noeud destinataire donné suivent le même chemin.

Dans le cas de réseaux maillés, il est souvent possible d'identifier plusieurs chemins pour relier un noeud source à un noeud destinataire. Dans ce cas, dans les systèmes connus, un seul des chemins est sélectionné et utilisé, pour l'ensemble des flux transmis par le noeud source au noeud destinataire à un instant donné. Le deuxième chemin peut reprendre l'ensemble du trafic en cas de panne du premier lien.

Parmi les protocoles de l'art antérieur, on connaît le protocole dit « Spanning Tree » (ou STP). Il s'agit d'un protocole de couche 2 (liaison de données) conçu pour les commutateurs ou les ponts permettant une topologie de réseau sans boucle dans les réseaux locaux (LAN). Ce protocole est défini dans la norme IEEE 802.1D. Selon ce protocole, les réseaux doivent avoir un unique chemin entre deux points, et donc proposer une topologie sans boucle. Le protocole STP détecte les boucles éventuelles, et désactive des liens réseaux en bloquant certains ports d'un commutateur, pour garantir l'unicité du chemin entre deux noeuds. Enfin, remarquons que le protocole STP est un protocole centralisé (via l'utilisation d'un unique noeud racine).

Un autre protocole connu est la commutation (« forwarding » en anglais) par destination de niveau 2. Les tables de commutation se construisent en se basant sur la destination. Le choix du meilleur chemin est fait grâce à des algorithmes du plus court chemin (métrique de « hop count », en anglais, ou nombre de sauts (c'est-à-dire de noeuds intermédiaires) pour atteindre le noeud destinataire).

Ces deux techniques connues de sélection de chemin ne prévoient pas de solution particulière, en cas d'échange de plusieurs flux distincts entre un même noeud source et un même noeud destinataire. Dans tous les cas, les différents flux emprunteront le même chemin, puisqu'ils sont associés à la même destination.

Dans certains cas, par exemple si un ou plusieurs flux sont déjà en cours de transmission entre le noeud source et le noeud destinataire, la transmission d'un flux supplémentaire peut être difficile, pour des raisons de surcharge du chemin.

Par exemple, dans le cas d'une commutation par destination, et si la métrique utilisée pour la sélection est le nombre de sauts, le lien va saturer lorsque trop de données seront à transmettre et il restera saturé jusqu'à la fin de la transmission.

On a également proposé de prendre en compte une métrique tenant compte des pertes de paquets. Dans ce cas, en situation de saturation détectée sur un premier chemin, l'ensemble des flux va basculer sur un deuxième chemin, dit chemin de secours, qui risque lui aussi de devenir saturé. On assiste alors à un phénomène d'oscillation (basculement de l'ensemble des flux d'un chemin à un autre), et donc à une forte dégradation de la qualité de service.

Dans le cas du protocole « Spanning Tree », certains ports sont bloqués, et le chemin entre un noeud source et un noeud destinataire est, dans toutes les situations, unique. Les trames, ou paquets, échangés entre deux noeuds devront absolument emprunter le même chemin. A nouveau, tous les flux destinés à un même destinataire et délivrés par un même noeud source devront suivre le même chemin.

Il existe donc un besoin d'une technique qui permette de pallier ces inconvénients des protocoles connus pour la couche de liaison.

L'invention répond à ce besoin en proposant un procédé suivant la revendication 1.

L'invention propose donc de prendre en compte un identifiant de flux et des catégories, par exemple des classes de service, de flux pour allouer un chemin parmi plusieurs. L'allocation de chemin correspond généralement à l'allocation d'une interface, ou lien, de sortie du noeud source, correspondant à une première portion du chemin, celui-ci étant constitué par une série de noeuds intermédiaires jusqu'au noeud destinataire.

Ainsi, il est possible d'allouer des chemins différents à des flux de catégories distinctes émis par un même noeud source et destinés à un même noeud destinataire, et donc d'optimiser la gestion de la charge. Cette optimisation tient compte notamment des catégories de flux, et par exemple de classes de service telles que « meilleur effort » (« best effort » en anglais), vidéo ou voix.

Selon un mode de réalisation particulier, ladite étape d'allocation d'un desdits chemins à un desdits flux tient compte également d'au moins une éventuelle affectation préalable d'un desdits chemins à au moins un autre flux.

Ainsi, si l'un des chemins est surchargé, ou considéré administrativement comme surchargé (dépassement d'un seuil), le procédé de l'invention selon ce mode de réalisation peut sélectionner un autre chemin que le chemin sélectionné en l'absence de surcharge. Dans ce cas notamment, deux flux transmis par le noeud source au destinataire peuvent utiliser deux chemins différents.

Selon un aspect particulier de l'invention, ledit identifiant affecté auxdits flux lors de ladite étape d'affectation est unique dans ledit réseau, pour un flux ou un groupe de flux liés.

Cet identifiant de flux unique dans le réseau permet de gérer simplement et efficacement la charge, l'identifiant pouvant être communiqué à tous les noeuds. Dans certains modes de réalisation, un identifiant de flux peut être affecté à un groupe de flux. Par exemple, le son et l'image d'une vidéoconférence sont deux flux différents, mais on peut vouloir leur affecter le même identifiant, pour être sûr qu'ils passent par le même chemin.

Selon un premier mode de réalisation particulier, ledit identifiant peut par exemple être obtenu par hachage d'un ensemble de données appartenant au groupe comprenant une adresse du noeud source, une adresse du noeud destinataire, un identifiant d'un protocole de transport dudit flux, un port source dudit protocole de transport dudit flux dans ledit noeud source, un port de destination dudit protocole de transport dudit flux dans ledit noeud destination.

Cette opération de hachage consiste à appliquer une fonction mathématique permettant de créer l'empreinte numérique d'un message, en transformant un message de taille variable en un code de taille fixe, en vue de son authentification ou de son stockage.

L'adresse du noeud source est par exemple l'adresse réseau du noeud source, c'est-à-dire l'adresse de niveau 3 du noeud source. De même, l'adresse du noeud destinataire est par exemple l'adresse réseau du noeud destinataire. Ce mode de réalisation est particulièrement adéquat pour une implémentation « hardware » où le calcul de ladite fonction se fait plus rapidement que dans le cas d'une implémentation « software ».

Selon un deuxième mode de réalisation particulier, ledit identifiant peut être obtenu par concaténation de bits extraits d'au moins deux champs d'au moins un paquet dudit flux, contenant au moins une des données appartenant au groupe comprenant une adresse du noeud source, une adresse du noeud destinataire, un identifiant d'un protocole de transport dudit flux, un port source dudit protocole de transport dudit flux dans ledit noeud source, un port de destination dudit protocole de transport dudit flux dans ledit noeud destination. Ce mode de réalisation est adapté pour une implémentation software, car il pénalise moins le temps d'écriture de l'identifiant de flux pour chaque trame.

Ces deux modes de réalisation garantissent l'unicité de l'identifiant du flux.

Dans un mode de réalisation particulier de l'invention, ladite étape d'allocation met en oeuvre, pour ledit noeud source, une table associant une interface de sortie dudit noeud source à un couple comprenant une adresse d'un noeud destinataire et une catégorie de flux.

Ladite table peut également associer à chacun desdits couples une information représentative de la charge pour l'interface de sortie concernée. Cette information représentative de la charge peut notamment être une information binaire, indiquant un état normal (noté par exemple « Default ») ou un état de surcharge (noté par exemple « Overload »).

La consultation de la table permet ainsi de détecter qu'une interface de sortie du noeud est en état de surcharge, et qu'il est préférable d'émettre un flux à transmettre sur une autre interface moins chargée.

Selon une mise en oeuvre particulière, l'identifiant d'un flux affecté à l'une desdites interfaces de sortie est associé dans ladite table à ladite interface de sortie et au couple associé à ladite interface de sortie.

Cet identifiant peut par exemple être enregistré dans le champ stockant également l'information représentative de la charge, ou dans un champ distinct.

Dans un mode de réalisation particulier, ledit réseau maillé met en oeuvre au moins deux types de supports de communication.

Le procédé de l'invention trouve en effet des applications notamment aux réseaux multi-technologie (utilisant par exemple les technologies Ethernet, Wifi, PLC...). Il peut également, bien sûr, s'appliquer à des réseaux maillés mono-technologie, mettant en oeuvre par exemple le protocole Ethernet.

Selon un mode de réalisation particulier, le procédé comprend une étape de ré-affectation de l'un desdits chemins à au moins un desdits flux en cours de transmission, lorsque la transmission d'un autre flux sur ledit chemin est terminée.

Il est ainsi possible de ré-affecter un chemin préférentiel, lorsque sa charge est allégée.

L'invention concerne également un produit programme d'ordinateur comprenant des instructions de code de programme pour l'exécution du procédé de gestion de chemins tel que décrit ci-dessus, lorsqu'il est exécuté par un processeur.

L'invention concerne encore un noeud suivant la revendication 12.

L'invention concerne également une table suivant la revendication 13.

D'autres caractéristiques et avantages de l'invention apparaîtront plus clairement à la lecture de la description suivante d'un mode de réalisation particulier donné à titre de simple exemple illustratif et non limitatif, et des figures annexées parmi lesquelles :
- La figure 1 illustre, de façon simplifiée, un exemple de réseau multi-chemins, mettant en oeuvre l'invention ;
- La figure 2 est un schéma synoptique simplifié décrivant les différentes étapes du procédé de l'invention ;
- La figure 3 présente un autre exemple de réseau mettant en oeuvre l'invention ;
- La figure 4 illustre schématiquement la structure d'un noeud source selon l'invention.

L'invention propose donc une nouvelle approche de la transmission de flux au niveau de la couche de liaison (couche 2 du système OSI), adapté au réseau maillé, permettant de définir plusieurs chemins entre un noeud source et un noeud destinataire. Il peut notamment s'agir d'un réseau Ethernet maillé, ou d'un réseau multi-technologique, dont les noeuds présentent au moins deux interfaces distinctes, aptes, par exemple, à gérer respectivement le protocole Ethernet, une transmission Wifi, ou une transmission sur courant porteur (PLC).

Selon l'invention, on propose une solution permettant de gérer des chemins multiples, au niveau de la couche de liaison, pour distribuer si nécessaire les flux à transmettre entre un noeud source A et un noeud destinataire B, notamment en fonction de leur catégorie.

La catégorie d'un flux peut être une classe de service, représentative du type de son contenu (vidéo, audio...). Elle peut également prendre en compte un niveau d'importance ou de priorité.

Ainsi, le procédé de gestion selon l'invention met principalement en oeuvre les étapes suivantes :
- association, à un flux à transmettre au noeud destinataire, d'une information représentative d'une catégorie de flux ;
- affectation d'une portion de l'un des chemins au flux, en tenant compte de l'information représentative d'une catégorie de flux.

L'attribution d'un chemin ou d'un autre dans le réseau tient donc compte, notamment, de cette catégorie.

Par ailleurs, selon le mode de réalisation présenté, on affecte à chaque flux un identifiant, appelé ici « Flow-ID », de façon à effectuer une commutation optimisée pour chaque flux (et non plus, comme dans l'art antérieur, uniquement par destination). Ainsi, cette commutation peut tenir compte d'une part de la catégorie, ou classe de service, et d'autre part de la charge de chaque chemin.

En d'autres termes, dans le mode de réalisation discuté, l'invention permet, au niveau de la couche de liaison, une commutation par destination, par catégorie, ou classe de service, par flux et par charge.

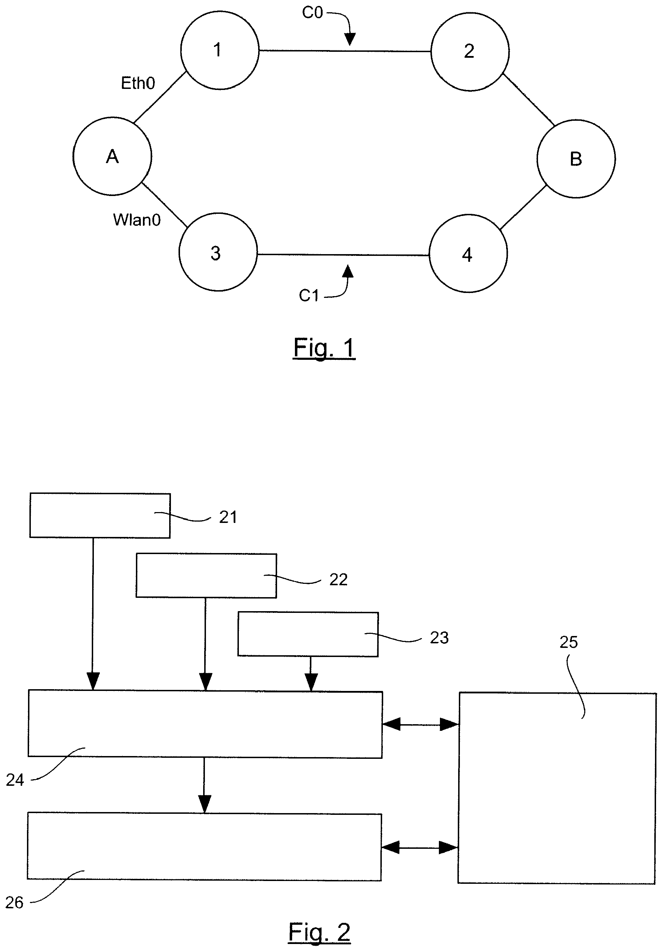

La figure 1 illustre un exemple simplifié de réseau maillé multi-technologique, mettant en oeuvre le procédé de l'invention. On considère les échanges entre un noeud source A et un noeud destinataire (ou noeud de destination) B. Ce noeud A peut communiquer avec le noeud B par deux chemins C0 (« chemin 0 ») et C1 (« chemin 1 ») supportés respectivement par les deux interfaces de sorties respectives EthO et Wlan0.

Le chemin C0 transite par deux noeuds intermédiaires 1 et 2, par exemple selon le protocole Ethernet, au moins pour la première portion entre le noeud A et le noeud 1. Vu du noeud A, le chemin C0 est associé à son interface de sortie EthO, et donc à la première portion du chemin C0 reliant le noeud A au noeud 1. La suite du transfert, sur les portions reliant le noeud 1 au noeud 2 puis le noeud 2 au noeud B, sont contrôlés respectivement par les noeuds 1 et 2, de façon connue en soi.

Le chemin C1 comprend les noeuds intermédiaires 3 et 4 interconnectés entre eux, en utilisant la technologie Wifi, au moins pour la première portion du chemin C1 entre le noeud A et le noeud 3. Vu du noeud A, le chemin C1 est associé à son interface de sortie Wlan0, et donc à la première portion du chemin C1 reliant le noeud A au noeud 3. La suite du transfert est assurée classiquement par les noeuds 3 et 4.

Contrairement aux techniques de l'art antérieur pour la couche de liaison, qui prévoit un chemin unique pour la transmission de l'ensemble des flux devant être transmis par le noeud A au noeud B, l'invention permet donc de choisir sélectivement le chemin C0 ou le chemin C1 en fonction notamment de la catégorie du flux considéré.

Par exemple, on pourra décider qu'un premier chemin, le chemin C0, appelé chemin nominal, est préférentiellement destiné à chaque catégorie, et que le chemin C1, appelé chemin de secours, est attribué lorsque la charge du chemin nominal est en surcharge, selon un critère de détermination de surcharge prédéterminé, comme expliqué ci-après. Dans ce cas, le choix d'un chemin ou d'un autre se fera en fonction, d'une part, de la catégorie du flux, et d'autre part, de la charge du chemin.

Selon une autre approche, on peut prévoir que le chemin C0 est le chemin par défaut pour au moins une première catégorie, alors qu'une deuxième catégorie, nécessitant moins d'exigences pourra se satisfaire par défaut du second chemin, bien qu'il soit moins performant.

Pour mettre en oeuvre la première approche, on prévoit l'association d'un numéro de flux (Flow-ID) à chaque flux. Ceci permet de gérer indépendamment le cheminement de deux flux pour la même destination, le cas échéant avec la même catégorie, et donc si nécessaire de leur attribuer deux chemins différents.

Pour cela, chaque noeud source gère, pour chaque noeud destinataire, une table de commutation, ou de « forwarding », constituée de façon générique, à l'initialisation de la topologie du réseau, en l'absence de flux.

Dans un autre mode de réalisation de l'invention, les étapes du procédé de gestion décrites précédemment sont (aussi) mises en oeuvre dans les noeuds intermédiaires. Ainsi, tous les noeuds du réseau, dès lors qu'ils sont capables d'émettre (et donc de transmettre) mettent en oeuvre les étapes du procédé décrit précédemment.

Un exemple de table de « forwarding » initial pour le noeud A du réseau de la figure 1 est illustré ci-après. Cette table initiale est construite lors de l'initialisation du réseau, en l'absence de flux à transmettre.

**Table 1 - table de « forwarding » initiale du noeud A**

| Destination | Classe de service | Métrique chemin | Flow usage | Interface de sortie |
|---|---|---|---|---|
| MAC@ B | Best Effort | 0 | Default | Eth0 |
| MAC@ B | Voix | 0 | Default | Wlan0 |
| MAC@ B | Vidéo | 0 | Default | Eth0 |
| MAC@ B | Best Effort | 1 | Default | Wlan0 |
| MAC@ B | Voix | 1 | Default | Eth0 |
| MAC@ B | Vidéo | 1 | Default | Wlan0 |

La première colonne comprend l'adresse de destination. Dans l'exemple de la figure 1, une seule destination (le noeud B) est prévue. Dans les cas réels, plusieurs autres noeuds destinataires pourront être identifiés, et les lignes nécessaires ajoutées en conséquence dans la table.

La deuxième colonne indique les différentes classes de service, ou catégories, de flux. Dans l'exemple présent, on a identifié trois catégories :
- « Best Effort », pour les flux de priorité la moins importante ;
- « Voix », pour les flux vocaux ;
- « Vidéo », pour les flux vidéo ou multimédia.

Il est bien sûr possible, sans sortir du cadre de l'invention, de définir d'autres catégories, ou au contraire de limiter leur nombre à deux.

La troisième colonne, « métrique de chemin », associe une métrique qui caractérise la qualité du chemin en question.

Les trois premières entrées, ou lignes, de la table définissent les chemins nominaux (métrique à 0 (la valeur zéro étant ici la valeur la plus importante)) pour les trois classes de service. Les trois entrées suivantes définissent les chemins de secours (métrique à 1).

Dans l'hypothèse où plus de deux interfaces de sortie sont disponibles, la table comprendrait des lignes supplémentaires pour chaque autre interface.

On peut par ailleurs prévoir que le chemin nominal pour une catégorie particulière ne soit pas le même que pour une autre catégorie.

La quatrième colonne « Flow usage » indique notamment l'état de charge de la portion suivante du chemin considéré. Dans le mode de réalisation illustré, il peut prendre deux valeurs « Default » ou « normal », et « Overload », ou « surcharge ».

La cinquième colonne, « interface de sortie », précise le chemin devant être utilisé pour chaque entrée.

On décrit maintenant un exemple de mise à jour de cette table.

Si le noeud A doit émettre un premier flux de type « Best effort », auquel le numéro de flux 11 a été attribué, à destination du noeud B, le champ « Flow usage » est mis à jour, avec le numéro de ce flux, comme illustré dans la table suivante.

Selon une autre approche, une colonne supplémentaire peut être prévue pour enregistrer ces numéros de flux dans la table.

**Table 2 - première mise à jour de la table de « forwarding » du noeud A**

| Destination | Classe de service | Métrique chemin | Flow usage | Interface de sortie |
|---|---|---|---|---|
| MAC@ B | Best Effort | 0 | Default-11 | Eth0 |
| MAC@ B | Voix | 0 | Default | Wlan0 |
| MAC@ B | Vidéo | 0 | Default | Eth0 |
| MAC@ B | Best Effort | 1 | Default | Wlan0 |
| MAC@ B | Voix | 1 | Default | Eth0 |
| MAC@ B | Vidéo | 1 | Default | Wlan0 |

Ce flux 11 va donc être transmis sur le chemin nominal EthO. Tant que ce chemin, ou lien, n'est pas saturé, tout autre flux de cette catégorie «Best effort » sera acheminé en utilisant cette entrée par défaut.

Si le noeud A doit, en plus, envoyer les paquets d'un flux vidéo numéro 12 à destination du noeud B, dans ce cas, le champ « Flow Usage » de la troisième entrée est mise à jour avec ce numéro de flux 12, comme illustré ci-dessous.

**Table 3 - deuxième mise à jour de la table de « forwarding » du noeud A**

| Destination | Classe de service | Métrique chemin | Flow usage | Interface de sortie | |
|---|---|---|---|---|---|
| MAC@ B | Best Effort | 0 | Overload-11 | Eth0 | |
| MAC@ B | Voix | 0 | Default | Wlan0 | |
| MAC@ B | Vidéo | 0 | Overload-12 | Eth0 | |
| MAC@ B | Best Effort | 1 | Default | Wlan0 | |
| MAC@ B | Voix | 1 | Overload | Eth0 | |
| MAC@ B | Vidéo | 1 | Default | Wlan0 | |

Le lien Eth0 arrive alors à saturation, du fait de la transmission des flux 11 et 12. Le champ « Flow Usage » est mis à jour en conséquence : toutes les entrées de la table ayant l'interface Eth0 comme interface de sortie sont marquées comme saturées (« Overload »).

Une telle saturation peut être détectée de manière réactive, la mise à jour régulière des métriques permettant de détecter une dégradation du chemin en question, et de le déclarer comme saturé. Elle peut également être détectée de manière proactive, le dépassement d'un seuil préalablement configuré sur la charge utilisée permettant de considérer l'interface de sortie comme saturée.

Si un nouveau flux vidéo 35 arrive, le noeud source va parcourir cette table de « forwarding », et constater que le chemin nominal est saturé. Il va donc décider d'utiliser le chemin de secours (chemin 1) pour ce flux 35.

Ainsi, comme illustré sur la table ci-dessous, le flux 35 va être transmis via le chemin de secours Wlan0, et le numéro du flux va être inscrit dans le champ correspondant.

**Table 4 - troisième mise à jour de la table de « forwarding » du noeud A**

| Destination | Classe de service | Métrique chemin | Flow usage | Interface de sortie | |
|---|---|---|---|---|---|
| MAC@ B | Best Effort | 0 | Overload-11 | Eth0 | |
| MAC@ B | Voix | 0 | Default | Wlan0 | |
| MAC@ B | Vidéo | 0 | Overload-12 | Eth0 | |
| MAC@ B | Best Effort | 1 | Default | Wlan0 | |
| MAC@ B | Voix | 1 | Overload | Eth0 | |
| MAC@ B | Vidéo | 1 | Default-35 | Wlan0 | |

Le flux vidéo 35 va être transmis par le deuxième chemin, alors que les flux 11 et 12 sont transmis par le premier chemin. On constate donc que des flux issus du même noeud source et destinés au même noeud destinataire peuvent être éclatés, ou distribués, sur plusieurs chemins, de façon à profiter des ressources offertes par le réseau.

La figure 2 illustre de façon schématique les étapes principales du procédé de l'invention.

Selon une première étape 21, on associe à chaque flux un numéro de flux, appelé « Flow-ID ». Ce numéro de flux est calculé par le noeud source, et codé dans un champ de l'en-tête protocolaire de chaque trame. Il est unique dans le réseau de niveau 2 considéré.

Il peut être calculé, par exemple, par hachage de plusieurs données (cas d'une implémentation « hardware ») telles que l'adresse du noeud source, l'adresse du noeud destinataire, un identifiant du protocole de transport du flux, le port source du protocole de transport du flux dans le noeud source, le port de destination du protocole de transport du flux dans le noeud destinataire...

Selon une autre approche, il peut être calculé par concaténation de bits extraits de différents champs des entêtes IP et TCP/UDP (cas d'une implémentation « software »). Ces champs peuvent notamment comprendre au moins une des données appartenant au groupe comprenant une adresse du noeud source, une adresse du noeud destinataire, un identifiant d'un protocole de transport dudit flux, un port source dudit protocole de transport dudit flux dans ledit noeud source, un port de destination dudit protocole de transport dudit flux dans ledit noeud destination.

Cet identifiant, ou numéro de flux, est codé, par exemple sur deux octets (16 bits), et est unique dans le réseau.

Ce numéro de flux permet que la sélection de chemin par les noeuds du réseau ne se fasse plus en se basant uniquement sur l'adresse de destination et la catégorie de flux, mais en tenant compte également du numéro de flux, et dans le mode de réalisation discuté, sur le triplet (destination, classe de service, numéro de flux).

En effet, dans une deuxième étape 22, on associe à chaque flux une classe de service, ou catégorie.

En fonction des trois informations que sont l'adresse de destination 23, la classe de service et le numéro de flux, une étape 24 d'affectation d'un chemin décide du chemin alloué au flux considéré, en se référant à la table 25, selon l'approche décrite ci-dessus.

Plus précisément, cette étape 24 identifie l'interface, ou port, de sortie du noeud source qui doit être utilisée (par exemple « EthO » ou « Wlan0 »), et donc la portion de chemin reliant le noeud source au noeud intermédiaire le plus proche dans le chemin considéré.

La table 25 est mise à jour en fonction de cette affectation 24, selon le processus décrit plus haut.

On peut par ailleurs prévoir une étape de réaffectation de chemin 26, en tenant compte de la modification de la charge d'un chemin, par exemple lorsque la transmission de l'un des flux est terminée. Dans ce cas, si le champ « Flow Usage » correspondant au chemin nominal (ou plus généralement un chemin préférentiel par rapport à celui couramment utilisé) revient à l'état « Default » pour une catégorie donnée, un flux de cette catégorie préalablement transmis sur le chemin de secours peut être transféré sur le chemin nominal.

Cette réaffectation peut être mise en oeuvre lorsqu'une fin de transmission de flux est détectée ou plus généralement de façon périodique. En effet, classiquement, les tables de « forwarding » sont mises à jour régulièrement, par exemple toutes les 100 millisecondes.

Il est en effet nécessaire que chaque noeud échange, avec ses noeuds voisins, ces informations de « forwarding », pour permettre l'acheminement jusqu'au noeud destinataire.

Cette mise à jour et ces échanges peuvent par exemple utiliser le protocole IS-IS (« Intermediate System to Intermediate System »), qui est un protocole de commutation à état de liens, permettant de maintenir une vue topologique commune.

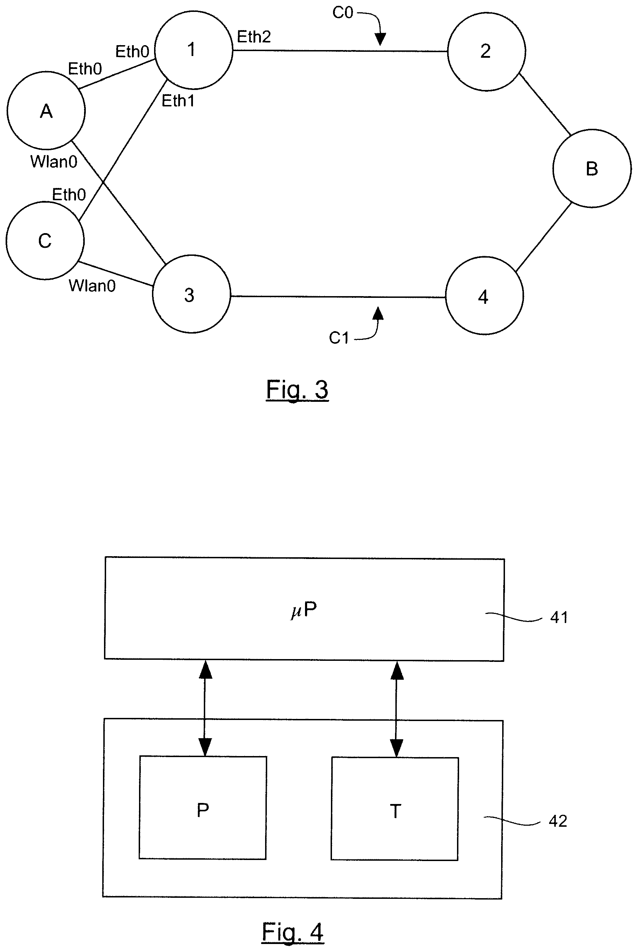

La figure 3 illustre un autre exemple de réseau, comprenant deux noeuds source voisins A et C tous deux susceptibles d'émettre des flux vers le noeud destinataire B, en utilisant les même noeuds intermédiaires 1 et 3.

Le noeud 1, dont la table de « forwarding » est présentée ci-après, comprend trois interfaces Ethernet Eth0, Eth1 et Eth2, reliées respectivement aux noeuds A, C et 2.

Il est important de noter que, dans ce cas, la gestion de la charge de chaque lien, ou chemin, tient compte des flux émis par chacun des deux noeuds source A et C. Ainsi, dans le cas ou le noeud C doit émettre un flux vidéo 17, alors que l'on se trouve dans la situation illustrée par la table 2, le numéro de flux 17 va apparaître dans la table de « forwarding » du noeud intermédiaire 1 alimenté par les noeuds source A et C comme illustré ci-après.

**Table 5 - mise à jour de la table de « forwarding » du noeud 1**

| Destination | Classe de service | Métrique chemin | Flow usage | Interface de sortie |
|---|---|---|---|---|
| MAC@ B | Best Effort | 0 | Overload-11 | Eth2 |
| MAC@ B | Voix | 0 | Default | Eth2 |
| MAC@ B | Vidéo | 0 | Overload-17 | Eth2 |
| MAC@ B | Best Effort | 1 | Default | Eth1 |
| MAC@ B | Voix | 1 | Default | Eth1 |
| MAC@ B | Vidéo | 1 | Default | Eth1 |
| MAC@ B | Best Effort | 2 | Default | Eth0 |
| MAC@ B | Voix | 2 | Default | Eth0 |
| MAC@ B | Vidéo | 2 | Default | Eth0 |

L'affectation de chemin dans le noeud A va donc être la même lorsque le flux vidéo 35 arrivera, que dans le cas où le flux vidéo 12 était transmis par le noeud A. En d'autres termes, le fait que les flux vidéo 12 ou 17 soient émis par le noeud A, ou par un autre noeud, en l'occurrence le noeud C pour le flux 17, n'a pas d'importance pour le choix de l'interface de sortie, mais les informations de la table sont différentes de la table 4. Ceci est possible, dans ce mode de réalisation, du fait de la diffusion par le protocole à état de lien de la saturation du lien 1-2 via une métrique élevée (positionnée à 10 dans l'exemple de la table 6 ci-dessous)

Si le lien entre les noeuds 1 et 2 sature, les noeuds A et C vont donc le détecter via une dégradation de la métrique, et adapter l'affectation en conséquence.

**Table 6 - mise à jour de la table de « forwarding » du noeud A avec les flux 11, 17 et 35**

| Destination | Classe de service | Métrique chemin | Flow usage | Interface de sortie |
|---|---|---|---|---|
| MAC@ B | Best Effort | 0 | Default-11 | Eth0 |
| MAC@ B | Voix | 0 | Default | Wlan0 |
| MAC@ B | Vidéo | 10 | Default | Eth0 |
| MAC@ B | Best Effort | 1 | Default | Wlan0 |
| MAC@ B | Voix | 1 | Default | Eth0 |
| MAC@ B | Vidéo | 1 | Default-35 | Wlan0 |

La figure 4 illustre schématiquement un noeud source mettant en oeuvre l'invention. Il est piloté par un microprocesseur µρ 41, qui communique avec une mémoire 42, contenant notamment la table de « forwarding » T. Cette mémoire 42, ou le cas échéant une autre mémoire, contient également le programme P permettant de piloter le microprocesseur 41, et mettant en oeuvre les étapes du procédé décrit ci-dessus.

Notamment, il met à jour la table, en fonction des flux qu'il doit émettre, et des informations qu'il reçoit de la part des noeuds voisins dans le réseau.

## Revendications

1. Procédé de gestion de chemins entre au moins un noeud source (A, C) et au moins un noeud destinataire (B) identifié au moyen d'une adresse MAC, au niveau de la couche de liaison, dans un réseau de communication maillé comprenant une pluralité de noeuds intermédiaires (1, 2, 3, 4), **caractérisé en ce que**, à un instant donné, au moins deux chemins distincts (C0, C1) entre ledit noeud source (A, C) et ledit noeud destinataire (B) sont définis pour distribuer des flux unicast de niveau 2 à transmettre entre ledit noeud source (A, C) et ledit noeud destinataire (B),
et **en ce que** ledit procédé met en oeuvre les étapes suivantes, dans ledit noeud source:
- affectation à chacun desdits flux d'un identifiant de flux (« Flow-ID »), ledit identifiant de flux étant unique pour un flux ou un groupe de flux liés ;
- association auxdits flux d'une information représentative d'une catégorie de flux, ladite information étant différente dudit identifiant de flux ;
- allocation d'un desdits chemins à un desdits flux en tenant compte dudit identifiant de flux, de ladite information de catégorie de flux et de la charge desdits chemins.

2. Procédé de gestion de chemins selon la revendication 1, **caractérisé en ce que** ladite étape d'allocation d'un desdits chemins à un desdits flux tient compte également d'au moins une éventuelle affectation préalable (25) d'un desdits chemins à au moins un autre flux.

3. Procédé de gestion de chemins selon la revendication 1, **caractérisé en ce que** ledit identifiant est obtenu par hachage d'un ensemble de données appartenant au groupe comprenant une adresse du noeud source, une adresse du noeud destinataire, un identifiant d'un protocole de transport dudit flux, un port source dudit protocole de transport dudit flux dans ledit noeud source, un port de destination dudit protocole de transport dudit flux dans ledit noeud destination.

4. Procédé de gestion de chemins selon la revendication 1, **caractérisé en ce que** ledit identifiant est obtenu par concaténation de bits extraits d'au moins deux champs d'au moins un paquet dudit flux, contenant au moins une des données appartenant au groupe comprenant une adresse du noeud source, une adresse du noeud destinataire, un identifiant d'un protocole de transport dudit flux, un port source dudit protocole de transport dudit flux dans ledit noeud source, un port de destination dudit protocole de transport dudit flux dans ledit noeud destination.

5. Procédé de gestion de chemins selon la revendication 1, **caractérisé en ce que** ladite étape (24) d'alllocation met en oeuvre, pour ledit noeud source, une table (25, T) associant une interface de sortie dudit noeud source à un couple comprenant une adresse d'un noeud destinataire et une catégorie de flux.

6. Procédé de gestion de chemins selon les revendications 2 et 5, **caractérisé en ce que** ladite table (25, T) associe audit couple une information représentative de la charge pour l'interface de sortie concernée.

7. Procédé de gestion de chemins selon la revendication 6, **caractérisé en ce que** ladite information représentative de la charge est une information binaire, indiquant un état normal ou un état de surcharge.

8. Procédé de gestion de chemins selon les revendications 1 et 5, **caractérisé en ce que** l'identifiant d'un flux affecté à l'une desdites interfaces de sortie est associé dans ladite table (25, T) à ladite interface de sortie et au couple associé à ladite interface de sortie.

9. Procédé de gestion de chemins selon la revendication 1, **caractérisé en ce que** ledit réseau maillé met en oeuvre au moins deux types de supports de communication.

10. Procédé de gestion de chemins selon la revendication 2, **caractérisé en ce qu'**il comprend une étape de ré-affectation (26) de l'un desdits chemins à au moins un desdits flux en cours de transmission, lorsque la transmission d'un autre flux sur ledit chemin est terminée.

11. Produit programme d'ordinateur, **caractérisé en ce qu'**il comprend des instructions de code de programme pour l'exécution du procédé de gestion de chemins selon la revendication 1, lorsqu'il est exécuté par un processeur.

12. Noeud source dans un réseau de communication maillé comprenant une pluralité de noeuds intermédiaires **caractérisé en ce qu'**il comprend des moyens permettant de définir au moins deux chemins distincts entre ledit noeud source et un noeud destinataire, et **en ce**
**qu'**il comprend des moyens d'affectation, à chacun des flux unicast de niveau 2 à transmettre audit noeud destinataire, d'un identifiant de flux, ledit identifiant de flux étant unique pour un flux ou un groupe de flux liés, des moyens d'association audit au moins un flux d'une information représentative d'une catégorie de flux, ladite information étant différente dudit identifiant de flux, et des moyens d'allocation d'un desdits chemins audit au moins un flux, en tenant compte dudit identifiant de flux, de ladite information de catégorie de flux et de la charge desdits chemins.

13. Table pour allouer au moins un chemin entre au moins un noeud source (A, C) et au moins un noeud destinataire (B) identifié au moyen d'une adresse MAC, au niveau de la couche de liaison, ladite table étant destinée à être stockée dans la mémoire dudit noeud source (A, C), le noeud source (A, C) étant apte à transmettre des flux unicast de données de niveau 2 au noeud destinataire dans un réseau de communication maillé comprenant une pluralité de noeuds intermédiaires, chacun des flux étant affecté d'un identifiant de flux, ledit identifiant de flux étant unique pour un flux ou un groupe de flux liés, ladite table étant **caractérisée en ce qu'**elle comprend des informations permettant :
- de définir au moins deux chemins distincts entre ledit noeud source et ledit noeud destinataire,
- d'associer une interface de sortie dudit noeud source, correspondant à l'un desdits au moins deux chemins, à un triplet comprenant une adresse d'un noeud destinataire, une catégorie de flux et une métrique .

## Patentansprüche

1. Verfahren zur Verwaltung von Pfaden zwischen mindestens einem Quellenknoten (A, C) und mindestens einem mittels einer MAC-Adresse identifizierten Zielknoten (B), im Bereich der Sicherungsschicht, in einem vermaschten Kommunikationsnetzwerk, das eine Vielzahl von Zwischenknoten (1, 2, 3, 4) enthält,
**dadurch gekennzeichnet, dass** zu einem gegebenen Zeitpunkt mindestens zwei unterschiedliche Pfade (C0, C1) zwischen dem Quellenknoten (A, C) und dem Zielknoten (B) definiert sind, um Layer-2-Unicast-Flüsse zu verteilen, die zwischen dem Quellenknoten (A, C) und dem Zielknoten (B) zu übertragen sind,
und dass das Verfahren die folgenden Schritte im Quellenknoten durchführt:
- Zuteilung einer Flusskennung "flow-ID" zu jedem der Flüsse, wobei die Flusskennung für einen Fluss oder eine Gruppe von verbundenen Flüssen einzig ist;
- Zuordnung einer für eine Flusskategorie repräsentativen Information zu den Flüssen, wobei die Information sich von der Flusskennung unterscheidet;
- Zuweisung eines der Pfade zu einem der Flüsse unter Berücksichtigung der Flusskennung, der Information über die Flusskategorie und der Last der Pfade.

2. Verfahren zur Verwaltung von Pfaden nach Anspruch 1, **dadurch gekennzeichnet, dass** der Schritt der Zuweisung eines der Pfade zu einem der Flüsse ebenfalls mindestens eine mögliche vorherige Zuteilung (25) eines der Pfade zu mindestens einem anderen Fluss berücksichtigt.

3. Verfahren zur Verwaltung von Pfaden nach Anspruch 1, **dadurch gekennzeichnet, dass** die Kennung durch Hashing einer Einheit von Daten erhalten wird, die zu der Gruppe gehören, die eine Adresse des Quellenknotens, eine Adresse des Zielknotens, eine Kennung eines Transportprotokolls des Flusses, einen Quellenport des Transportprotokolls des Flusses im Quellenknoten, einen Zielport des Transportprotokolls des Flusses im Zielknoten enthält.

4. Verfahren zur Verwaltung von Pfaden nach Anspruch 1, **dadurch gekennzeichnet, dass** die Kennung durch Verkettung von Bits erhalten wird, die aus mindestens zwei Feldern mindestens eines Pakets des Flusses entnommen werden, die mindestens eine der Daten enthalten, die zu der Gruppe gehören, die eine Adresse des Quellenknotens, eine Adresse des Zielknotens, eine Kennung eines Transportprotokolls des Flusses, einen Quellenport des Transportprotokolls des Flusses im Quellenknoten, einen Zielport des Transportprotokolls des Flusses im Zielknoten enthält.

5. Verfahren zur Verwaltung von Pfaden nach Anspruch 1, **dadurch gekennzeichnet, dass** der Zuweisungsschritt (24) für den Quellenknoten eine Tabelle (25, T) verwendet, die eine Ausgangsschnittstelle des Quellenknotens einem Paar zuordnet, das eine Adresse eines Zielknotens und eine Flusskategorie enthält.

6. Verfahren zur Verwaltung von Pfaden nach den Ansprüchen 2 und 5, **dadurch gekennzeichnet, dass** die Tabelle (25, T) dem Paar eine Information zuordnet, die für die Last für die betroffene Ausgangsschnittstelle repräsentativ ist.

7. Verfahren zur Verwaltung von Pfaden nach Anspruch 6, **dadurch gekennzeichnet, dass** die für die Last repräsentative Information eine binäre Information ist, die einen normalen Zustand oder einen Überlastzustand anzeigt.

8. Verfahren zur Verwaltung von Pfaden nach den Ansprüchen 1 und 5, **dadurch gekennzeichnet, dass** die Kennung eines Flusses, der einer der Ausgangsschnittstellen zugeordnet ist, in der Tabelle (25, T) der Ausgangsschnittstelle und dem der Ausgangsschnittstelle zugeordneten Paar zugeordnet ist.

9. Verfahren zur Verwaltung von Pfaden nach Anspruch 1, **dadurch gekennzeichnet, dass** das vermaschte Netz mindestens zwei Typen von Kommunikationsträgern verwendet.

10. Verfahren zur Verwaltung von Pfaden nach Anspruch 2, **dadurch gekennzeichnet, dass** es einen Schritt der erneuten Zuteilung (26) eines der Pfade zu mindestens einem der übertragen werdenden Flüsse enthält, wenn die Übertragung eines anderen Flusses auf dem Pfad beendet ist.

11. Computerprogrammprodukt, **dadurch gekennzeichnet, dass** es Programmcodeanweisungen für die Ausführung des Verfahrens zur Verwaltung von Pfaden nach Anspruch 1 enthält, wenn es von einem Prozessor ausgeführt wird.

12. Quellenknoten in einem vermaschten Kommunikationsnetzwerk, das eine Vielzahl von Zwischenknoten enthält, **dadurch gekennzeichnet, dass** es Einrichtungen enthält, die es ermöglichen, mindestens zwei unterschiedliche Pfade zwischen dem Quellenknoten und einem Zielknoten zu definieren, und dass es Einrichtungen zur Zuteilung, zu jedem der an den Zielknoten zu übertragenden Layer-2-Unicast-Flüsse, einer Flusskennung, wobei die Flusskennung für einen Fluss oder eine Gruppe von verbundenen Flüssen einzig ist, Einrichtungen zur Zuordnung zum mindestens einen Fluss einer für eine Flusskategorie repräsentativen Information, wobei die Information sich von der Flusskennung unterscheidet, und Einrichtungen zur Zuweisung eines der Pfade zum mindestens einen Fluss enthält, unter Berücksichtigung der Flusskennung, der Information über die Flusskategorie und der Last der Pfade.

13. Tabelle zum Zuweisen mindestens eines Pfads zwischen mindestens einem Quellenknoten (A, C) und mindestens einem mittels einer MAC-Adresse identifizierten Zielknoten (B), im Bereich der Sicherungsschicht, wobei die Tabelle dazu bestimmt ist, im Speicher des Quellenknotens (A, C) gespeichert zu werden, wobei der Quellenknoten (A, C) Layer-2-Unicast-Flüsse an den Zielknoten in einem vermaschten Kommunikationsnetzwerk übertragen kann, das eine Vielzahl von Zwischenknoten enthält, wobei jedem der Flüsse eine Flusskennung zugeteilt ist, wobei die Flusskennung für einen Fluss oder eine Gruppe von verbundenen Flüssen einzig ist, wobei die Tabelle **dadurch gekennzeichnet ist, dass** sie Informationen enthält, die es ermöglichen:
- mindestens zwei unterschiedliche Pfade zwischen dem Quellenknoten und dem Zielknoten zu definieren,
- eine Ausgangsschnittstelle des Quellenknotens, die einem der mindestens zwei Pfade entspricht, einem Triplet zuzuordnen, das eine Adresse eines Zielknotens, eine Flusskategorie und eine Metrik enthält.

## Claims

1. Method for managing paths between at least one source node (A, C) and at least one recipient node (B) which is identified by means of a MAC address, at the level of the link layer, in a meshed communication network comprising a plurality of intermediate nodes (1, 2, 3, 4),
**characterized in that**, at a given instant, at least two distinct paths (C0, C1) between said source node (A, C) and said recipient node (B) are defined so as to distribute unicast streams of level 2 to be transmitted between said source node (A, C) and said recipient node (B),
and **in that** said method implements the following steps, in said source node:
- assignment to each of said streams of a stream identifier, "flow-ID", said stream identifier being unique for a stream or a group of linked streams;
- association with said streams of an information item representative of a category of stream, said information item being different from said stream identifier;
- allocation of one of said paths to one of said streams by taking account of said stream identifier, of said stream category information item and of the load of said paths.

2. Method for managing paths according to Claim 1, **characterized in that** said step of allocating one of said paths to one of said streams takes account also of at least one optional prior assignment (25) of one of said paths to at least one other stream.

3. Method for managing paths according to Claim 1, **characterized in that** said identifier is obtained by hashing of a set of data belonging to the group comprising an address of the source node, an address of the recipient node, an identifier of a transport protocol for said stream, a source port of said transport protocol for said stream in said source node, a destination port of said transport protocol for said stream in said destination node.

4. Method for managing paths according to Claim 1, **characterized in that** said identifier is obtained by concatenation of bits extracted from at least two fields of at least one packet of said stream, containing at least one of the data belonging to the group comprising an address of the source node, an address of the recipient node, an identifier of a transport protocol for said stream, a source port of said transport protocol for said stream in said source node, a destination port of said transport protocol for said stream in said destination node.

5. Method for managing paths according to Claim 1, **characterized in that** said step (24) of allocation implements, for said source node, a table (25, T) associating an output interface of said source node with a pair comprising an address of a recipient node and a stream category.

6. Method for managing paths according to Claims 2 and 5, **characterized in that** said table (25, T) associates with said pair an information item representative of the load in respect of the output interface concerned.

7. Method for managing paths according to Claim 6, **characterized in that** said information item representative of the load is a binary information item, indicating a normal state or an overload state.

8. Method for managing paths according to Claims 1 and 5, **characterized in that** the identifier of a stream assigned to one of said output interfaces is associated in said table (25, T) with said output interface and with the pair associated with said output interface.

9. Method for managing paths according to Claim 1, **characterized in that** said meshed network implements at least two types of communication supports.

10. Method for managing paths according to Claim 2, **characterized in that** it comprises a step (26) of reassignment of one of said paths to at least one of said streams in the course of transmission, when the transmission of another stream on said path has terminated.

11. Computer program product, **characterized in that** it comprises program code instructions for the execution of the method for managing paths according to Claim 1, when it is executed by a processor.

12. Source node in a meshed communication network comprising a plurality of intermediate nodes, **characterized in that** it comprises means making it possible to define at least two distinct paths between said source node and a recipient node, and **in that** it comprises means for assigning, to each of the unicast streams of level 2 to be transmitted to said recipient node, a stream identifier, said stream identifier being unique for a stream or a group of linked streams, means for associating with said at least one stream an information item representative of a category of stream, said information item being different from said stream identifier, and means for allocating one of said paths to said at least one stream, by taking account of said stream identifier, of said stream category information item and of the load of said paths.

13. Table for allocating at least one path between at least one source node (A, C) and at least one recipient node (B) which is identified by means of a MAC address, at the level of the link layer, said table being intended to be stored in the memory of said source node (A, C), the source node (A, C) being able to transmit unicast data streams of level 2 to the recipient node in a meshed communication network comprising a plurality of intermediate nodes, each of the streams being assigned a stream identifier, said stream identifier being unique for a stream or a group of linked streams, said table being **characterized in that** it comprises information items making it possible:
- to define at least two distinct paths between said source node and said recipient node,
- to associate an output interface of said source node, corresponding to one of said at least two paths, with a triplet comprising an address of a recipient node, a stream category and a metric.
